# EUROPEAN PATENT APPLICATION

(11) **EP 4 604 379 A1**
(43) Date of publication of application: **20.08.2025**
(21) Application number: 23914147.6
(22) Date of filing: 09.03.2023
(51) Int. Cl.: H02M 3/335

(54) **CONVERTER, HIGH-VOLTAGE DIRECT-CURRENT TRANSFORMER, AND CONTROL METHOD**

(30) Priority: 06.01.2023 CN 202310021948; 20.01.2023 CN 202310108407
(71) Applicant: TSINGHUA UNIVERSITY, Beijing, 100084 (CN); Sichuan Energy Internet Research Institute Tsinghhua University, Chengdu, Sichuan 610299 (CN)
(72) Inventor: ZENG, Rong, Beijing 100084 (CN); ZHANG, Xueyin, Chengdu, Sichuan 610299 (CN); ZHAO, Biao, Beijing 100084 (CN); CUI, Bin, Beijing 100084 (CN); QU, Lu, Beijing 100084 (CN); YU, Zhanqing, Beijing 100084 (CN)
(74) Representative: Meissner Bolte Partnerschaft mbB
(86) International application number: PCT/CN2023/080611
(87) International publication number: WO 2024/145992

(57) **Abstract**

The present disclosure provides a converter, a high-voltage direct current transformer, and a control method. The converter includes a series valve group and a switched capacitor valve group connected in parallel. The series valve group includes multiple valve string bridge arms connected in parallel, and each valve string bridge arm includes one or more first power switch modules connected in series. The switched capacitor valve group includes one or more second power switch modules connected in series. The switched capacitor valve group provided by the present disclosure reduces switching loss in the series valve group, and has high efficiency.

## Description

### TECHNCIAL FIELD

The present disclosure belongs to the technical field of direct current power transmission systems, and in particular to a converter, a high-voltage direct current transformer, and a control method.

### BACKGROUND ART

With the flourishing development of renewable energy sources, the novel power system has attracted the attention of academics and industry. direct current system is a novel power system in sharp contrast with an AC (alternating current) system. In comparison with the AC system, the direct current system has the advantages of stability, high efficiency, strong controllability, and low harmonic level, and is an ideal model for the collection and transportation of renewable energy sources.

In the existing direct current system, equipment for AC and direct current conversion is mainly a converter, such as a modular multilevel converter (MMC). However, the existing MMC is high in switching loss and low in efficiency, and such a problem has not been properly solved.

Therefore, there is a need to design a converter, a high-voltage direct current transformer and a control method to solve the technical problems above.

### SUMMARY

For the technical problem above, the present disclosure provides a converter, including a series valve group and a switched capacitor valve group connected in parallel.

The series valve group includes multiple valve string bridge arms connected in parallel, and each valve string bridge arm includes one or more first power switch modules connected in series.

The switched capacitor valve group includes one or more second power switch modules connected in series.

Further, the first power switch module includes a power switch device T1, a diode D1, a voltage equalizing capacitor C1, and an energy dissipating element H1.

The energy dissipating element H1 is connected in parallel to two ends of the voltage equalizing capacitor C1.

An anode of the diode D1 is connected to a collector of the power switch device T1, one end of the voltage equalizing capacitor C1 is connected to a cathode of the diode D1, the other end of the voltage equalizing capacitor C1 is connected to an emitter of the power switch device T1, and a diode D2 is connected in anti-parallel to the power switch device T1.

Further, the energy dissipating element H1 is any one, or a combination of, an energy acquisition power supply, a first energy dissipating resistor, and a switchable device.

The switchable device includes a second energy dissipating resistor, and a switch connected in series with the second energy dissipating resistor.

Further, the first power switch module further includes a switch-type bypass element K1. One end of the switch-type bypass element K1 is connected to the collector of the power switch device T1, and the other end of the switch-type bypass element K1 is connected to the emitter of the power switch device T1.

Further, the second power switch module is any one, or a combination of multiple, of a half-bridge circuit, a full-bridge circuit, and a hybrid module.

Further, the hybrid module includes a first number of half-bridge circuits and a second number of full-bridge circuits connected in series.

Further, the converter further includes an electric reactor which is connected to the series valve group.

The present disclosure further provides a high-voltage direct current transformer, which includes an isolation transformer, and a converter.

The isolation transformer includes at least two alternating current (AC) ports, each alternating current port is correspondingly connected to one or more converters, and the one or more converters employ the converter above.

The present disclosure further provides a control method for a converter. The converter employs the converter above, and the control method includes:
controlling an output voltage Um of the converter, which includes:
performing zero-crossing point detection on Um, wherein a series valve group is switched to an output state only at a zero-crossing point of Um; and
controlling an output voltage |Um| of a switched capacitor valve group.

The present disclosure further provides a control method for a high-voltage direct current transformer. The high-voltage direct current transformer employs the direct current transformer above, and the control method includes:
controlling an output voltage of a switched capacitor valve group, making the output voltage drop to 0 within time t_{cq} before switching an on/off state of a series valve group, thus achieving soft switching of the series valve group.

The present disclosure provides a converter, a high-voltage direct current transformer, and a control method. The switched capacitor valve group provided by the present disclosure can reduce the switching (power switch device) loss in the series valve group, and has high efficiency. The arrangement of the diode D1 greatly reduces the consumption of the power switch device and the capacitor. The direct current transformer topology provided by the present disclosure can achieve zero voltage switch (ZVS) and zero current switch (ZCS) of the power switching devices, and thus has low cost, high efficiency, and small size. Less components also make the direct current transformer topology more reliable than the traditional topology.

Other features and advantages of the present disclosure will be set forth in the following description, and will be apparent in part from the specification, or may be learned by implementing the present disclosure. The objectives and other advantages of the present disclosure may be implemented and acquired by the structure pointed out in the specification and the accompanying drawings.

### BRIEF DESCRIPTION OF THE DRAWINGS

To describe the technical solutions of the present disclosure or in the prior art more clearly, the following briefly introduces the accompanying drawings required for describing the embodiments or the prior art. Apparently, the accompanying drawings in the following description show merely some embodiments of the present disclosure, and those of ordinary skill in the art may still derive other drawings from these accompanying drawings without creative efforts.
FIG. 1 shows a topological diagram of a high-voltage direct current transformer according to an embodiment of the present disclosure;
FIG. 2 shows a topological diagram of an energy dissipating element according to an embodiment of the present disclosure when the energy dissipating element is an energy acquisition power supply;
FIG. 3 shows a topological diagram of an energy dissipating element according to an embodiment of the present disclosure when the energy dissipating element is a first energy dissipating resistor;
FIG. 4 shows a topological diagram of an energy dissipating element according to an embodiment of the present disclosure when the energy dissipating element is a switchable device;
FIG. 5 shows a topological diagram of a first combination form according to an embodiment of the present disclosure;
FIG. 6 shows a topological diagram of a second combination form according to an embodiment of the present disclosure;
FIG. 7 shows a topological diagram of a third combination form according to an embodiment of the present disclosure;
FIG. 8 shows a topological diagram of a switched capacitor valve group according to an embodiment of the present disclosure when a second power switch module is a half-bridge circuit;
FIG. 9 shows a topological diagram of a switched capacitor valve group according to an embodiment of the present disclosure when a second power switch module is a full-bridge circuit;
FIG. 10 shows a topological diagram of a hybrid module according to an embodiment of the present disclosure;
FIG. 11 shows a topological diagram of an MMC according to an embodiment of the present disclosure;
FIG. 12 shows a topological diagram of a first device series H-bridge structure according to an embodiment of the present disclosure;
FIG. 13 shows a topological diagram of a second device series H-bridge structure according to an embodiment of the present disclosure;
FIG. 14 shows a flow diagram of a control method for a high-voltage direct current transformer according to an embodiment of the present disclosure;
FIG. 15 shows a topological diagram of a high-voltage direct current transformer in a case according to an embodiment of the present disclosure;
FIG. 16 shows graphs of a voltage of a high voltage-side AC port, a voltage of a low voltage-side AC port, a modulated wave voltage of a high voltage-side series valve group, a voltage of a high voltage-side switched capacitor valve group, a modulated wave voltage of a low voltage-side series valve group and a voltage of a low-voltage side switched capacitor valve group varying with time t according to an embodiment of the present disclosure.

### DETAILED DESCRIPTION

To make the objectives, technical solutions and advantages of the present disclosure more clearly, the following clearly and completely describes the technical solutions in the embodiments of the present disclosure with reference to the accompanying drawings in the embodiments of the present disclosure. Apparently, the described embodiments are merely a part rather than all of the embodiments of the present disclosure. All other embodiments obtained by a person of ordinary skill in the art based on the embodiments of the present disclosure without creative efforts shall fall within the scope of protection of the present disclosure.

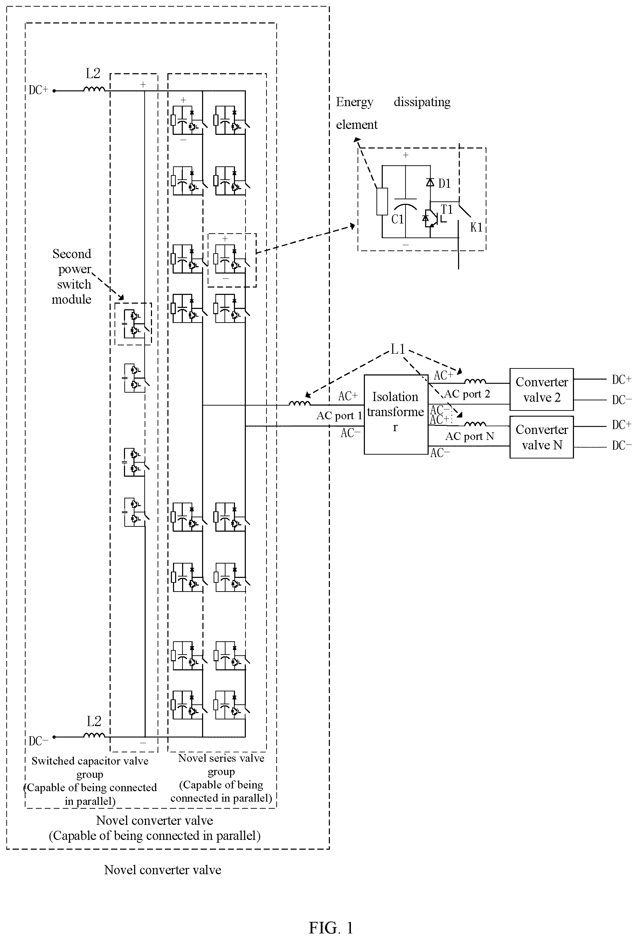

As shown in FIG. 1, the present disclosure provides a converter, including a series valve group and a switched capacitor valve group connected in parallel.

The series valve group includes multiple valve string bridge arms connected in parallel, and each valve string bridge arm includes one or more first power switch modules connected in series.

The switched capacitor valve group includes one or more second power switch modules connected in series.

The converter further includes an electric reactor which is connected to the series valve group.

In direct current system, unlike AC, the direct current cannot achieve voltage change through electromagnetic induction principle. Therefore, a direct current transformer based on power electronics technology is core equipment of the direct current system. The direct current system often requires multi-stage voltage conversion, and the direct current transformer for converting a high-voltage direct current into a medium-voltage or low-voltage direct current is often called a high-voltage direct current transformer. The existing high-voltage direct current transformer has few topological types, and generally has the problems of high consumption of the power switch device (power switch device and diode) and capacitor. In addition, the existing high-voltage direct current transformer does not have the soft switching characteristics of the power switching device. The above problems lead to the high cost, large size, low efficiency and poor reliability of the existing scheme, which seriously restricts the development of the direct current system.

Therefore, the present disclosure further provides a high-voltage direct current transformer, which includes an isolation transformer, and a converter.

The isolation transformer includes at least two AC ports, each AC port is correspondingly connected to one or more converters. One or more converters employ the converter above.

A high-voltage direct current transformer topology of the present disclosure is described in detail below.

In some embodiments of the present disclosure, each alternating current port (AC port, e.g., AC port 1, AC port 2...AC port N) in the isolation transformer is provided with an AC+ terminal and an AC- terminal. The isolation transformer may, or may not, employ a ferromagnetic transformer. That is, the AC+ terminal of each AC port is connected to a corresponding converter through an external connecting reactor L1, and the connecting reactor L1 may be present, or absent.

In some embodiments of the present disclosure, each converter includes a direct current port composed of a DC+ terminal and a DC- terminal, and an AC port composed of an AC+ terminal and an AC- terminal. The AC port of each converter is connected to the isolation transformer, the direct current ports can form an external direct current port independently, be connected in parallel (that is, the DC+ terminals are connected together, and the DC- terminals are connected together), or be connected in series (the DC+ terminal of one converter is connected to the DC- terminal of another converter, and so on).

In some embodiments of the present disclosure, at least one of the at least two AC ports is a converter, and the others are other converters (for example, converter 2...converter N in FIG. 1). The novel converter is different in structure from other converters.

Other converters are a modular multilevel converter MMC, a first device series H-bridge structure, and a second device series H-bridge structure.

The structure of the converter in the embodiment of the present disclosure is described below.

In an embodiment of the present disclosure, the converter (i.e., the converter in FIG. 1) includes a smoothing reactor L2 (i.e., an electric reactor), one or multiple switched capacitor valve groups capable of being connected in parallel, and one or multiple series valve groups capable of being connected in parallel.

The switched capacitor valve group is connected in parallel with the series valve group, and the smoothing reactor L2 is connected in series with an entire formed by connecting the switched capacitor valve group and the series valve group in parallel.

In an embodiment of the present disclosure, the series valve group includes multiple valve string bridge arms connected in parallel. Each valve string bridge arm includes one or more first power switch modules connected in series, and includes an upper bridge arm, and a lower bridge arm. That is, in the embodiment of the present disclosure, the series valve group includes two upper bridge arms, and two lower bridge arms. One end of one upper bridge arm is connected to one end of one lower bridge arm through a connecting midpoint, and one end of the other upper bridge arm is connected to one end of the other lower bridge arm through a connecting midpoint. The other end of one upper bridge arm is connected to the other end of the other upper bridge arm, and the other end of one bridge arm is connected to the other end of the other lower bridge arm.

The upper bridge arm and the lower bridge arm each include one or more first power switch modules connected in series.

In an embodiment of the present disclosure, the first power switch module includes a power switch device T1, a diode D1, a voltage equalizing capacitor C1, and an energy dissipating element. An anode of the diode D1 is connected to an anode of the power switch device T1 (a collector of the power switch device T1), one end of the voltage equalizing capacitor C1 is connected to a cathode of the diode D1, and the other end of the voltage equalizing capacitor C1 is connected to a cathode of the power switch device T1 (an emitter of the power switch device T1). One end of the energy dissipating element is connected to one end of the voltage equalizing capacitor C1, and the other end of the energy dissipating element is connected to the other end of the voltage equalizing capacitor C1, and the diode D1 is connected in anti-parallel to the power switch device T1. The first power switch module further includes a switch-type bypass element K1. One end of the switch-type bypass element K1 is connected to an anode of the other power switch device T1, and the other end of the switch-type bypass element K1 is connected to a cathode of the other power switch device T1.

The switch-type bypass element K1 has two functions: one is to bypass the first power switch module in failure, thus ensuring the normal operation of other first power switch modules in the corresponding bridge arm. The second is to bypass a corresponding black module (i.e., some first power switch modules fail to power on a control system for some reason, e.g., an energy acquisition power supply is damaged). If the black module does not operate normally due to the energy acquisition power supply, and a conventional controllable bypass switch does not have power to electrically control the module to be bypassed, the over-voltage breakdown characteristic of a thyristor or a diode needs to be used to achieve automatic bypass of the module.

The switch-type bypass element K1 is any one, or a combination (e.g., a parallel combination) of multiple, of a mechanical switch, a semiconductor switch, and a thyristor, or K1 may not be configured. In particular, when T1 is an IGCT, K1 does not need to use the thyristor, this is because the IGCT has over-voltage breakdown and long-term current flow characteristics of the thyristor, which can achieve the bypass of the black module.

In the embodiment of the present disclosure, the energy dissipating element is any one or a combination of an energy acquisition power supply, a first energy dissipating resistor and a switchable device. The energy acquisition power supply is configured to acquire energy from the voltage equalizing capacitor C1, and supply power to a control circuit of the first power switch module.

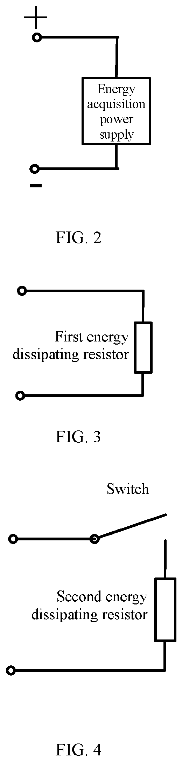

As shown in FIG. 2, when the energy dissipating element is the energy acquisition power supply, a positive electrode + of the energy acquisition power supply is connected to a positive electrode of the voltage equalizing capacitor C1, and a negative electrode - of the energy acquisition power supply is connected to a negative electrode of the voltage equalizing capacitor C1.

As shown in FIG. 3, when the energy dissipating element is the first energy dissipating resistor, one end of the first energy dissipating resistor is connected to the positive electrode of the voltage equalizing capacitor C1, and the other end of the first energy dissipating resistor is connected to the negative electrode of the voltage equalizing capacitor C1.

As shown in FIG. 4, when the energy dissipating element is the switchable device, the switchable device includes a second energy dissipating resistor, and a switch (for example, the switch may be a switch capable of interrupting a small direct current, such as a relay, a contactor, a circuit breaker, a semiconductor switch, the switch may be a relay, a contactor, a circuit breaker, and a semiconductor device). One end of the switch is connected to one end of the second energy dissipating resistor, the other end of the switch is connected to the positive electrode of the voltage equalizing capacitor C1, and the other end of the second energy dissipating capacitor is connected to the negative electrode of the voltage equalizing capacitor C1. The switching control of the second energy dissipating resistor can be achieved by the disposed switch.

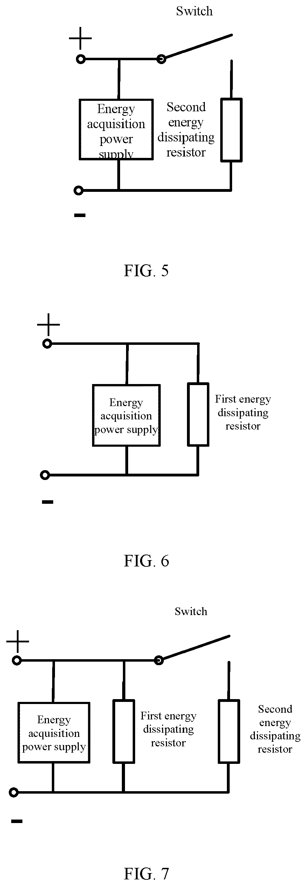

When the energy dissipating element is a combination of the energy acquisition power supply, the first energy dissipating resistor and the switchable device, the structure of the combination includes, but is not limited to, the following combination forms:
First combination form: as shown in FIG. 5, the energy dissipating element includes the switchable device, and the energy acquisition power supply. One end of a switch in the switchable device is connected to one end of the second energy dissipating resistor, and the other end of the switch is connected to a positive electrode + of the energy acquisition power supply. The other end of the second energy dissipating resistor is connected to a negative electrode - of the energy acquisition power supply. The positive electrode + of the energy acquisition power supply is connected to the positive electrode of the voltage equalizing capacitor C1, and the negative electrode - of the energy acquisition power supply is connected to the negative electrode of the voltage equalizing capacitor C1. In addition, there may be the following changes for the switch in this combination form:
one end of the switch in the switchable device is connected to the other end of the second energy dissipating resistor, and the other end of the switch in the switchable device is connected to the negative electrode - of the energy acquisition power supply. One end of the second energy dissipating resistor is connected to the positive electrode + of the energy acquisition power supply.

Second combination form: as shown in FIG. 6, the energy dissipating element includes the first energy dissipating resistor, and the energy acquisition power supply. One end of the first energy dissipating resistor is connected to the positive electrode + of the energy acquisition power supply, and the other end of the first energy dissipating resistor is connected to the negative electrode - of the energy acquisition power supply. The positive electrode + of the energy acquisition power supply is connected to the positive electrode of the voltage equalizing capacitor C1, and the negative electrode - of the energy acquisition power supply is connected to the negative electrode of the voltage equalizing capacitor C1.

Third combination form: as shown in FIG. 7, the energy dissipating element includes the first energy dissipating resistor, the energy acquisition power supply, and the switchable device. One end of the first energy dissipating resistor is connected to the positive electrode + of the energy acquisition power supply, and the other end of the first energy dissipating resistor is connected to the negative electrode - of the energy acquisition power supply. The positive electrode + of the energy acquisition power supply is connected to the positive electrode of the voltage equalizing capacitor C1, and the negative electrode - of the energy acquisition power supply is connected to the negative electrode of the voltage equalizing capacitor C1. One end of the switch is connected to one end of the second energy dissipating resistor, the other end of the switch is connected to one end of the first energy dissipating resistor, and the other end of the second energy dissipating resistor is connected to the other end of the first energy dissipating resistor. In addition, there may be the following changes in this combination form:
one end of the switch is connected to the other end of the second energy dissipating resistor, the other end of the switch is connected to the other end of the first energy dissipating resistor, and the other end of the second energy dissipating resistor is connected to one end of the first energy dissipating resistor.

In an embodiment of the present disclosure, when the upper bridge arm and the lower bridge arm each include one first power switch module:
in the upper bridge arm, an anode of a power switch device T1 in the first power switch module serves as the other end of the upper bridge arm, and a cathode of the power switch device T1 in the first power switch module serves as one end of the upper bridge arm; and
in the lower bridge arm, the anode of the power switch device T1 in the first power switch module serves as one end of the lower bridge arm, and a cathode of the power switch device T1 in the first power switch module serves as the other end of the lower bridge arm.

In an embodiment of the present disclosure, when the upper bridge arm and the lower bridge arm each include multiple first power switch modules in series:
in the upper bridge arm, the multiple power switch devices T1 are connected in series, an anode of a first power switch device T1 in the first power switch module at the head serves as the other end of the upper bridge arm, and a cathode of the power switch device T1 in the last first power switch module serves as one end of the upper bridge arm; in other power switch devices T1, the anode of the latter power switch device T1 is connected to the cathode of the previous power switch device T1; and
in the lower bridge arm, the multiple power switch devices T1 are connected in series, the anode of the first power switch device T1 at the head serves as one end of the lower bridge arm, and the cathode of the last first power switch device T1 serves as the other end of the lower bridge arm; and in other power switch devices T1, the anode of the latter power switch device T1 is connected to the cathode of the previous power switch device T1.

In the embodiment of the present disclosure, one end of the switched capacitor valve group is connected to the other end of the upper bridge arm, and the other end of the switched capacitor valve group is connected to the other end of the lower bridge arm.

The switched capacitor valve group includes one or more second power switch modules connected in series.

In the embodiment of the present disclosure, when the switched capacitor valve group includes one second power switch module:
one end of the second power switch module serves as one end of the switched capacitor valve group, and the other end of the second power switch module serves as the other end of the switched capacitor valve group.

In the embodiment of the present disclosure, when the switched capacitor valve group includes multiple second power switch modules connected in series:
one end of the first second power switch module serves as one end (positive electrode + terminal) of the switched capacitor valve group, and the other end of the last second power switch module serves as the other end (negative electrode - terminal) of the switched capacitor valve group, and in other second power switch modules, one end of the latter second power switch module is connected to the other end of the previous second power switch module.

In the embodiment of the present disclosure, the second power switch module is any one of a half-bridge circuit, a full-bridge circuit, and a hybrid module. The hybrid module is a module formed by connecting the half-bridge circuit and the full-bridge circuit in series. The structures of the half-bridge circuit, the full-bridge circuit and the hybrid module are described in detail below.

In an embodiment of the present disclosure, the power switch device T1 may be an insulated gate bipolar transistor (IGBT), an integrated gate-commutated thyristor (IGCT), a field-effect transistor (FET), etc.

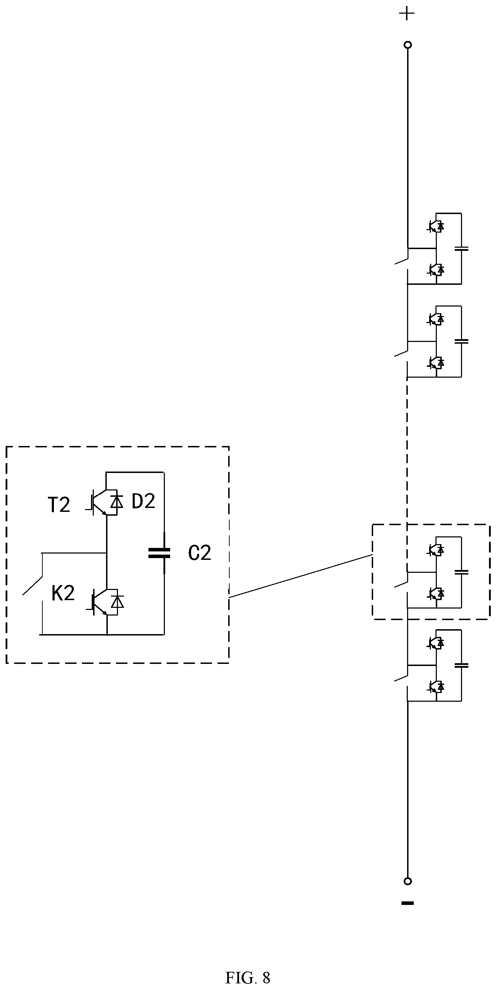

As shown in FIG. 8, when the second power switch module is the half-bridge circuit, the half-bridge circuit includes a capacitor C2, and two power switch devices T2. A cathode of one of the power switch devices T2 (hereinafter referred to as an upper switch tube T2) is connected to an anode of the other power switch device T2 (hereinafter referred to as a lower switch tube T2). One end of the capacitor C2 is connected to an anode of the upper switch tube T2, and the other end of the capacitor C2 is connected to a cathode of the lower switch tube T2. The anode of the lower switch tube T2 serves as one end of the corresponding second power module, and the cathode of the lower switch tube T2 serves as the other end of the corresponding second power module. A diode D2 is connected in anti-parallel to each power switch device T2.

The half-bridge circuit further includes a switch-type bypass element K2. one end of the switch-type bypass element K2 is connected to the anode of the lower switch tube T2, and the other end of the switch-type bypass element K2 is connected to the cathode of the lower switch tube T2.

The switch-type bypass element K2 has two functions: one is to bypass the second power switch module in failure, thus ensuring the normal operation of other second power switch modules in the corresponding bridge arm. The second is to bypass a corresponding black module (i.e., some second power switch modules fail to power on a control system for some reason, e.g., an energy acquisition power supply is damaged). If the black module does not operate normally due to the energy acquisition power supply, and a conventional controllable bypass switch does not have power to electrically control the module to be bypassed, the over-voltage breakdown characteristic of a thyristor or a diode needs to be used to achieve automatic bypass of the module.

The switch-type bypass element K2 is one or a combination (e.g., a parallel combination) of multiple of a mechanical switch, a semiconductor switch, and a thyristor, or K2 may not be configured. In particular, when T2 is the IGCT, K2 does not need to use the thyristor, this is because the IGCT has the over-voltage breakdown and long-term current flow characteristics of the thyristor, which can achieve the bypass of the black module.

In the embodiment of the present disclosure, the power switch device T2 may be IGBT, IGCT, FET, etc.

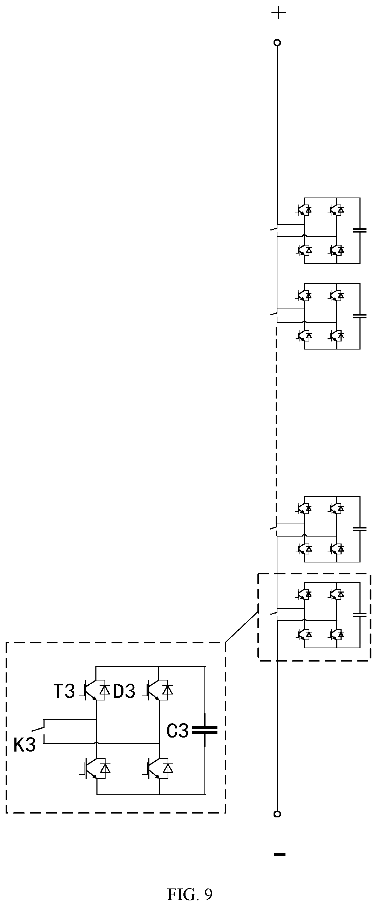

As shown in FIG. 9, when the second power switch module is the full-bridge circuit, the full-bridge circuit includes a first bridge arm, a second bridge arm, and a capacitor C3. The first bridge arm and the second bridge arm each include two power switch devices T3. A cathode of one of the power switch devices T3 (hereinafter referred to as an upper switch tube T3) of the first bridge arm is connected to an anode of the other power switch device T3 (hereinafter referred to as a lower switch tube T3) of the first bridge arm through a connecting point.

The cathode of the upper switch tube T3 of the second bridge arm is connected to the anode of the lower switch tube T3 of the first bridge through a connecting point. The anode of the upper switch tube T3 of the first bridge arm is connected to the anode of the upper switch tube T3 of the second bridge arm; and the cathode of the lower switch tube T3 of the first bridge arm is connected to the cathode of the lower switch tube T3 of the second bridge arm.

One end of the capacitor C3 is connected to the anode of the upper switch tube T3 of the second bridge arm, and the other end of the capacitor C3 is connected to the cathode of the lower switch tube T3 of the second bridge arm. The connecting point of the first bridge arm serves as one end of the corresponding second power module, and the connecting point of the second bridge arm serves as the other end of the corresponding second power module. A diode is connected in anti-parallel to each power switch device T3.

The half-bridge circuit further includes a switch-type bypass element K3, and two ends of the switch-type bypass element K3 are connected to the two connecting points, respectively.

The switch-type bypass element K3 has two functions: one is to bypass the second power switch module in failure, thus ensuring the normal operation of other second power switch modules in the corresponding bridge arm. The second is to bypass a corresponding black module (i.e., some second power switch modules fail to power on a control system for some reason, e.g., an energy acquisition power supply is damaged). If the black module does not operate normally due to the energy acquisition power supply, and a conventional controllable bypass switch does not have power to electrically control the module to be bypassed, the over-voltage breakdown characteristic of a thyristor or a diode needs to be used to achieve automatic bypass of the module.

The switch-type bypass element K3 is one or a combination (e.g., a parallel combination) of multiple of a mechanical switch, a semiconductor switch, and a thyristor, or K3 may not be configured. In particular, when T3 is the IGCT, K3 does not need to use the thyristor, this is because the IGCT has the over-voltage breakdown and long-term current flow characteristics of the thyristor, which can achieve the bypass of the black module.

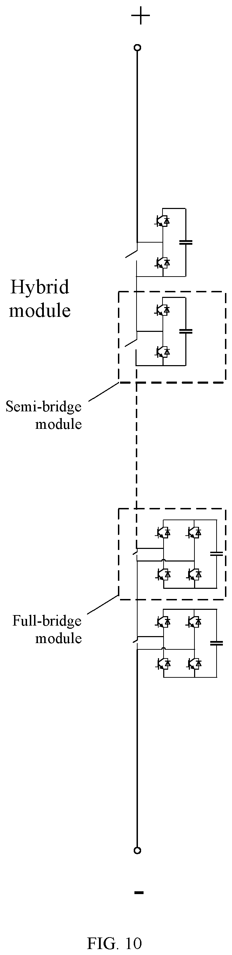

In some embodiments of the present disclosure, as shown in FIG. 10, the switched capacitor valve group is the hybrid module. The hybrid module includes a first number of half-bridge circuits connected in series, and a second number of full-bridge circuits connected in series. Exemplary, the first number of half-bridge circuits connected in series and the second number of full-bridge circuits connected in series are connected in series. That is, the first number of half-bridge circuits are sequentially connected in series, the second number of full-bridge circuits are sequentially connected in series, and an entire formed by sequentially connecting the first number of half-bridge circuits in series is connected in series with an entire formed by sequentially connecting the second number of full-bridge circuits in series.

When the first number and the second number are both 1, the cathode of the lower switch tube T2 in the half-bridge circuit is connected to the connecting point of the first bridge arm in the full-bridge circuit, the anode of the lower switch tube T2 in the half-bridge circuit serves as one end of the switched capacitor valve group, and the connecting point of the second bridge arm in the full-bridge circuit serves as the other end of the switched capacitor valve group.

When the first number and the second number are both greater than 1, in the first number of half-bridge circuits connected in series and the second number of full-bridge circuits connected in series, the cathode of the lower switching tube T2 in the last half-bridge circuit is connected to the connecting point of the first bridge arm in the first full-bridge circuit, the anode of the lower switching tube T2 in the first half-bridge circuit serves as one end of the switched capacitor valve group, and the connecting point of the second bridge arm in the last full-bridge circuit serves as the other end of the switched capacitor valve group. In other half-bridge circuits, the anode of the lower switch tube T2 in the latter half-bridge circuit is connected to the cathode of the lower switch tube T2 in the previous half-bridge circuit. In other full-bridge circuits, the connecting point of the first bridge arm in the latter full-bridge circuit is connected to the connecting point of the second bridge arm in the previous full-bridge circuit.

In the embodiment of the present disclosure, the switched capacitor valve group uses a modularized circuit (such as the second power module, or hybrid module) to make a direct current support capacitor (such as the capacitor C2 in FIG. 8 and the capacitor C3 in FIG. 9) distributed inside the module. When a direct current bus is short-circuited, the module can be locked to prevent capacitor discharge from increasing short-circuit current; The module can be switched actively, which is beneficial to the voltage sharing of the voltage equalizing capacitor. The switching of the module can achieve ZVS and quasi-ZCS of the series valve group.

In some embodiments of the present disclosure, the entire isolation transformer must have an AC port connected to the converter, and the other AC ports may be connected to the converter, MMC, a first device series H-bridge structure, or a second device series H-bridge structure. The MMC, the first device series H-bridge structure and the second device series H-bridge structure are described in detail below.

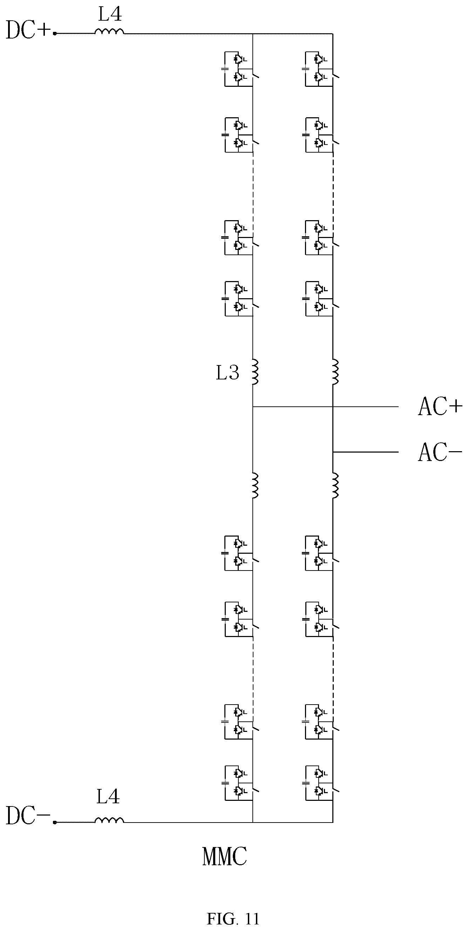

In some embodiments of the present disclosure, as shown in FIG. 11, the MMC includes two converter bridge arms connected in parallel, each converter bridge arm includes an upper bridge arm, and a lower bridge arm. One end of the upper bridge arm of each converter bridge arm is connected to one end of the lower bridge arm. The other ends of the upper bridge arms of the two converter bridge arms are connected to each other, and the other ends of the lower bridge arms of the two converter bridge arms are connected to each other.

The upper bridge arm and the lower bridge arm of the converter bridge arm each include a half-bridge cascade module, and an inductor L3. One end of the inductor L3 of each upper bridge arm is connected to one end of the corresponding half-bridge cascade module, and one end of the inductor L3 of each lower bridge arm is connected to one end of the corresponding half-bridge cascade module. The other end of the inductor L3 of the upper bridge arm of each converter bridge arm is connected to the other end of the inductor L3 of the corresponding lower bridge arm through a connecting midpoint. The half-bridge cascade module includes n cascaded half-bridge circuits (that is, multiple half-bridge circuits are sequentially connected in series). In the two bridge arms, the two connecting midpoints are connected to the AC+ terminal and the AC- terminal of the isolation transformer, respectively.

For the upper bridge arm, in the n half-bridge circuits, one of cascade connecting points of the first half-bridge circuit (hereinafter referred to as an upper cascade point) serves as the other end of the half-bridge cascade module, the other end of the half-bridge cascade module is connected to one end of an inductor L4, and the other end of the inductor L4 is a DC+ terminal of the corresponding converter. The other cascade connecting point of the n^{-th} half-bridge circuit (hereinafter referred to as a lower cascade point) is connected to one end of the corresponding inductor L3 as one end of the half-bridge cascade module. In other half-bridge circuits, the upper cascade point of each half-bridge circuit (the cathode of the upper switch tube in the half-bridge circuit is connected to the upper cascade point) is connected to the lower cascade point of the previous bridge circuit (the cathode of the lower switch tube in the half-bridge circuit is connected to the lower cascade point).

For the lower bridge arm, in the n half-bridge circuits, the upper cascade point of the first half-bridge circuit is connected to one end of the corresponding inductor L3 as one end of the half-bridge cascade module. The other end of the half-bridge cascade module is connected to one end of the other inductor L4, and the other end of the inductor L4 is a DC- terminal of the corresponding converter. That is, the lower cascade point of the n^{-th} half-bridge circuit is connected to one end of the other inductor L4 as the other end of the half-bridge cascade module. In other half-bridge circuits, the upper cascade point of each half-bridge circuit is connected to the lower cascade point of the previous half-bridge circuit.

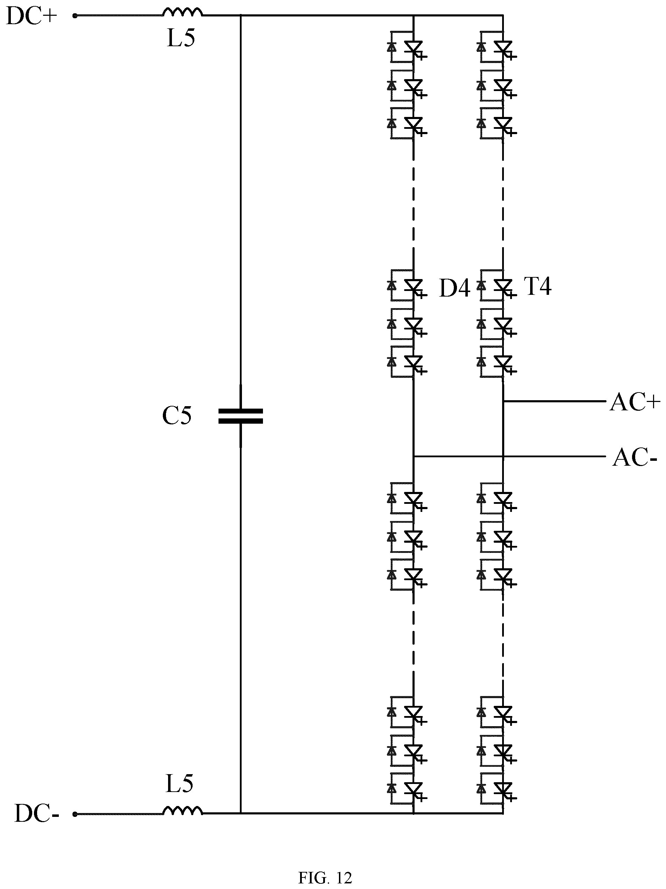

In some embodiments of the present disclosure, as shown in FIG. 12, the first device series H-bridge structure includes two bridge arms connected in parallel. In the two bridge arms, each bridge arm is divided into an upper bridge arm, and a lower bridge arm. One end of the upper bridge arm is connected to one end of the lower bridge arm through a connecting midpoint, and the two connecting midpoints are connected to the AC+ terminal and the AC- terminal of the corresponding isolation transformer, respectively. The other ends of the two upper bridge arms are connected to each other and then connected to one end of an inductor L5 (the other end of the inductor L5 is a DC+ terminal of the corresponding converter), and the other ends of the two lower bridge arms are connected to each other, and then connected to one end of the other inductor L5 (the other end of the inductor is a DC- terminal of the corresponding converter). The upper bridge arm and the lower bridge arm each include power switch devices T4 connected in series. The multiple power switching devices T4 are connected in series as follows:
for the upper bridge arm, an anode of the first power switch device T4 serves as one end of the upper bridge arm, and a cathode of the last first power switch device T4 serves as one end of the upper bridge arm; in other power switch devices T4, the anode of the latter power switch device T4 is connected to the cathode of the previous power switch device T4; and
for the lower bridge arm, the anode of the first power switch device T4 serves as one end of the lower bridge arm, and the cathode of the last power switch device T4 serves as the other end of the lower bridge arm; and in other power switch devices T4, the anode of the latter power switch device T4 is connected to the cathode of the previous power switch device T4.

In addition, in the embodiment of the present disclosure, a capacitor C5 is arranged between the ends of the two inductors L5, and a diode D4 is connected in anti-parallel to each power switch device T4.

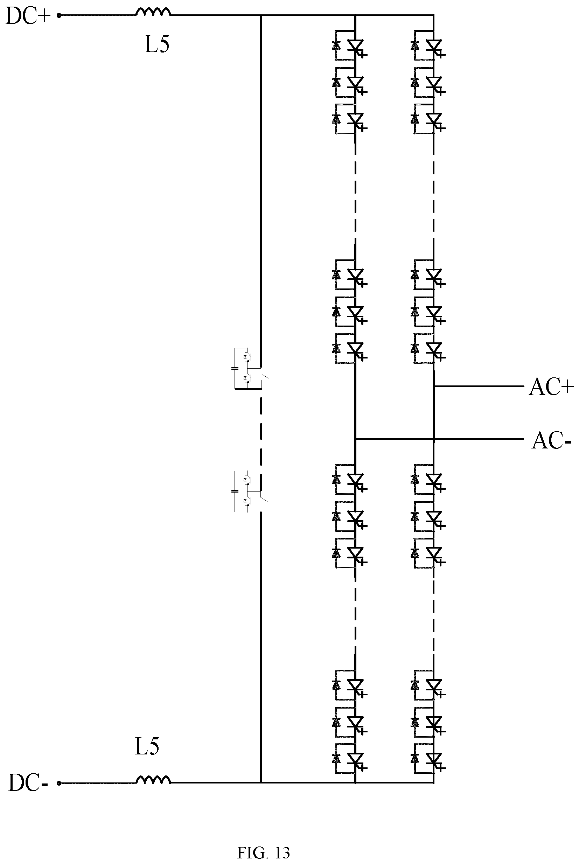

In some embodiments of the present disclosure, as shown in FIG. 13, the difference between the second device series H-bridge structure and the first device series H-bridge structure is that the switched capacitor valve group is arranged between ends of the two inductors L5 of the second device series H-bridge structure, and the second power module in the switched capacitor valve group is the half-bridge circuit.

In some embodiments of the present disclosure, the present disclosure further provides a control method for a converter. The method is implemented based on the above converter, and includes the following steps:
an output voltage Um of the converter is controlled (in actual, a voltage of an output end of a series valve group is equal to Um), which includes the following steps:
(1) Um (phase voltage modulated wave voltage) is subjected to zero-crossing point detection, and the series valve group is switched to an output state only at a zero-crossing point of Um.
(1.1) The switching to an output state satisfies that:
   when Um (phase voltage modulated wave voltage) changes from negative to positive, the output state of the series valve group is switched from a situation that lower left and upper right bridge arms (the lower bridge arm of one phase bridge arm and the upper bridge arm of the other phase bridge arm) of the series valve group are turned on and upper left and lower right bridge arms (the upper bridge arm of one phase bridge arm and the lower bridge arm of the other phase bridge arm) are turned off to a situation that the upper left and lower right bridge arms (the upper bridge arm of one phase bridge arm and the lower bridge arm of the other phase bridge arm) are turned on and the lower left and right upper bridge arms (the lower bridge arm of one phase bridge arm and the upper bridge arm of the other phase bridge arm) are turned off; and
   when Um (phase voltage modulated wave voltage) changes from positive to negative, the output state of the series valve group is switched from a situation that the upper left and lower right bridge arms are turned on and the lower left and upper right bridge arms are turned off to a situation that the lower left and upper right bridge arms are turned on and the upper left and lower right bridge arms are turned off.
(1.2) Um (phase voltage modulated wave voltage) is subjected to zero-crossing point detection, which is as follows:
   a control system samples a modulated wave voltage Um, and compares the latest sampling voltage Um1 with a sampling voltage Um0 of a previous sampling period, and when Um1*Um0≤0, it is indicated that the zero-crossing point occurs.
(1.1.2) The turn-on of the upper bridge arm or lower bridge arm is represented as follows:
   part or all of the power switch devices in the upper bridge arm or the lower bridge arm are turned on.

The turn-off of the upper bridge arm or lower bridge arm is represented as follows:
the power switch devices in part or all of the power switch device modules in the upper bridge arm or the lower bridge arm are turned off, and it is satisfied that the number of power switch device modules in which the power switch device is not turned off is less than the number of novel power switch device modules in which the power switch device is not turned off in the upper bridge arm or the lower bridge arm in the turn-on state.

The upper bridge arm and the lower bridge arm each include multiple first power switch device modules connected in series.

(1.1.2.1) The upper bridge arm or lower bridge arm which is turned off satisfies the following:
in the upper bridge arm or lower bridge arm, the sum of voltages of the voltage equalizing capacitors in the power switch device module in which the power switch device is turned off is greater than a voltage output by the switched capacitor valve group at this time.

The function of the control is to convert a pulsating direct current voltage |Um| (referring to an absolute value of Um) into the modulated wave voltage Um for output.

(2) The output voltage |Um| of the switched capacitor valve group is controlled, which is as follows:
taking an absolute value of Um (phase voltage modulated wave voltage) to obtain |Um|, where the switched capacitor valve group outputs |Um| through a modulation strategy (e.g., carrier phase shift modulation and nearest level modulation, which will not be repeated here).

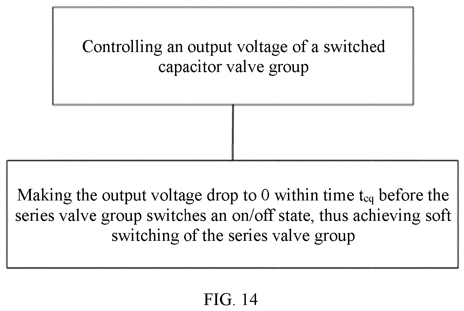

In some embodiments of the present disclosure, as shown in FIG. 14, a control method for a high-voltage direct current transformer is provided. The method is implemented based on the above converter, and includes the following steps:
A transmission power control strategy between AC ports of the direct current transformer is selected.

A reference wave voltage uacx of each of a first to N^{-th} AC ports of the direct current transformer is generated according to the transmission power control strategy.

An output voltage of the corresponding switched capacitor valve group and the reference wave voltage |uacx| in the converter x are obtained according to the reference wave voltage uacx (x = 1, 2, ..., N).

The waveform output of the modulated wave of the series valve group and the switched capacitor valve group is controlled according to the reference wave voltage uacx and the reference wave voltage |uacx|.

The method above is described in detail below.
Step 1. A transmission power control strategy (rectangular wave phase shift control, trapezoidal wave phase shift control, stepped wave phase shift control, triangular wave phase shift control, sine wave amplitude and phase control, etc.) between AC ports of the direct current transformer is selected.
steps 2. A reference wave voltage uacx (x-1, 2,...,N) of the first to N^{-th} AC ports of the direct current transformer is generated according to the selected transmission power control strategy.
steps 3. According to the reference wave voltage uacx, an output voltage (a voltage between + and - electrodes) of the switched capacitor valve group corresponding to the converter x is obtained, i.e., a reference wave voltage |uacx| (i.e., the absolute value of uacx), and the switched capacitor valve group generates the same output voltage according to |uacx|.
Step 4. The series valve group is switched to an output state only at the zero-crossing point of uacx. Specifically, when uacx changes from positive to negative, for example, in FIG. 1, the upper left and lower right bridge arms of the series valve group are turned off, and the lower left and upper right bridge arms of the series valve group are turned on. When uacx changes from negative to positive, for example, in FIG. 1, the lower left and upper right bridge arms of the series valve group are turned off, and the upper left and lower right bridge arms of the series valve group are turned on. Each bridge arm of the series valve group is formed by connecting multiple series modules in series. During turn-on and turn-off, the power switch devices T1 of all series modules in one bridge arm can act simultaneously, or in sequence.
Step 5. The output voltage of the switched capacitor valve group is controlled without considering the waveform of |uacx|, thus making the output voltage drop to zero within time t_{cq} before switching the on/off state of the series valve group, and achieving ZVS and quasi-ZCS of the series valve group (ZVS and quasi-ZCS are one form of soft switching). t_{cq} here is artificially set leading time to offset the influence of communication delay of the control system and dead time of the power semiconductor switch devices.
Step 6. An output voltage of the switched capacitor valve group is controlled to make the output voltage increase to |uacx| within time t_{zh} after switching the on/off state of the series valve group, such that the output voltage of the switched capacitor valve group can be recovered to the modulated wave voltage |uacx| after achieving the ZVS and quasi-ZCS of the series valve group. t_{zh} here is artificially set lag time to offset the influence of communication delay of the control system and dead time of the power semiconductor switch devices.

The methods in Steps 1 to 6 are used to control what voltage the switched capacitor valve group outputs, to control when the series valve group is switched to the output state, and to achieve soft switching of the series valve group.

In another aspect, the present disclosure further provides a control method for a high-voltage direct current transformer. The high-voltage direct current transformer employs the direct current transformer above and the control method includes the following steps:
determining a receiving end and a transmitting end of direct current transformer; and
determining a control strategy according to the types of the receiving end and the transmitting end.

Specifically,
The hybrid high-voltage direct current transformer disclosed by the present disclosure is based on phase shift control, that is, there is a phase difference between square wave voltages output by a high voltage side and a low voltage side, and the power size and direction are controlled by adjusting the phase difference. Single phase shift control, dual phase shift control and triple phase shift control can be employed. Exemplary, for example, single phase shift control is that each converter outputs a square wave voltage, a trapezoidal wave voltage, or a trapezoidal wave voltage with stepped wave level between the AC ports, and there is a phase difference (phase shift angle) between the voltages of the AC ports, and the power size and direction are controlled by adjusting the phase difference. Through the above control, the size and direction of the power can be controlled, and then the power of transmission between the DC ports can be indirectly controlled, thus achieving the following control objectives:
one of the high voltage side and the low voltage side of the direct current transformer is the transmitting end, while the other is the receiving end. When the receiving end is a load (electrical equipment, which may be a resistance load, or a constant power load, etc.), and the transmitting end is a voltage source, the control strategy is direct current voltage control at a constant transmitting end, that is, a deviation obtained by a difference between a reference value of the direct current voltage at the receiving end and a feedback value is output by a PI (proportional-integral) regulator to obtain a phase shift angle. When both the receiving end and the transmitting end are voltage sources, the control strategy is power control at the constant receiving end/transmitting end, that is, a deviation obtained by a difference between a reference value of the power at the receiving end/transmitting end and a feedback value is output by the PI regulator to obtain a phase shift angle. When the receiving end is the voltage source and the transmitting end is the power source, the control strategy is direct current control at the constant transmitting end, that is, a deviation obtained by a difference between the reference value of the direct current voltage at the transmitting end and the feed value is output by the PI regulator to obtain the phase shift angle.

The present disclosure is exemplified by a case.

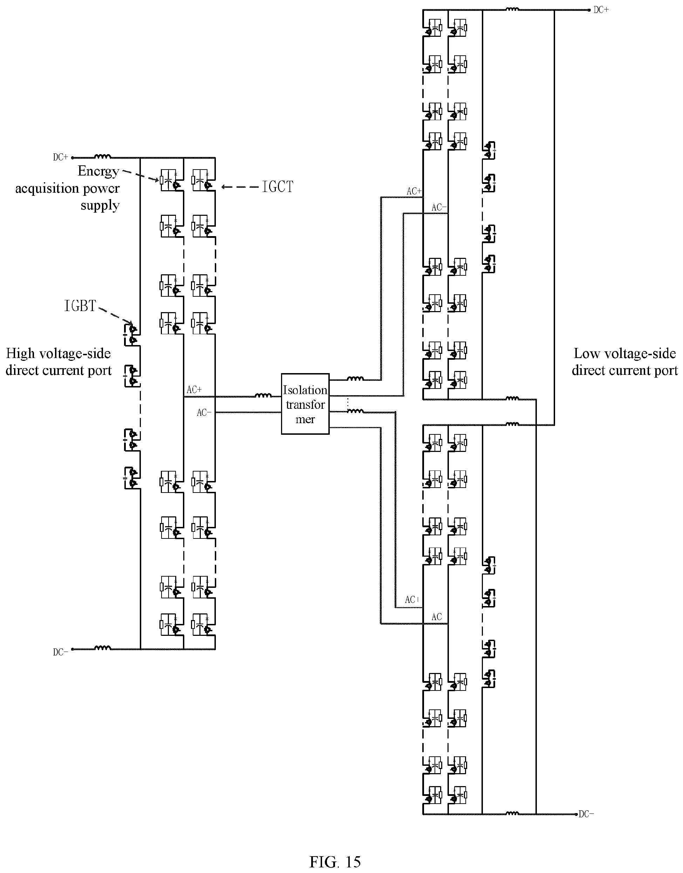

As shown in FIG. 15, one high-voltage direct current transformer includes a high voltage-side direct current port, and a low voltage-side direct current port. A high voltage-side AC port of the isolation transformer is connected to a high voltage-side converter, and two low voltage-side AC ports are connected to two low voltage-side converters, respectively. The direct current ports of the two low voltage-side converters are connected in parallel, thus forming a low-voltage direct current port. The parallel connection can improve the current capacity and implement the tolerance of the converter to the large low-voltage current.

ZVS and quasi-ZCS of the series valve group have extremely low switching loss, and IGCT is adopted to achieve large current and low loss. In contrast, the switched capacitor valve group is small in on-state current and extremely low in on-state loss, and IGBT is used to achieve low switching loss. The IGBT is small in di/dt is small, which limits the reverse recovery speed of the diode D1 of the series valve group, so there is no need to configure a clamping circuit and an anode reactor which are necessary for the traditional IGCT module for the first power module, the cost, size and loss are reduced, and the reliability is improved.

As shown in FIG. 15, since only the lower tube of the series module (the first power module) adopts the power switch device, the consumption of the power switch device is greatly reduced compared with that of MMC. The upper tube of the series module is a low current diode, the cost of which is much lower than that of the MMC submodule. The charging and discharging power of the voltage equalizing capacitor of the series module is particularly small, so the capacitance is small and the volume is small. Ideally, the charging power of the voltage equalizing capacitor is mainly from stray inductance freewheeling of the bridge arm, which is small and can be dissipated by the energy picking power supply (in this case, the energy dissipating element is the energy acquisition power supply), thus solving the self-energy acquisition problem of the series valve group. In addition, as the voltage equalizing capacitor can only be charged through the diode, but cannot discharged through the series diode, the capacitance of the voltage equalizing capacitor does not affect the ZVS characteristics of the series valve. Therefore, the capacitance of the voltage equalizing capacitor in this case can be larger than that of the traditional series valve (but is still far smaller than that of the MMC submodule, i.e., the capacitance of the half-bridge circuit), thus ensuring the effect of voltage-sharing in series.

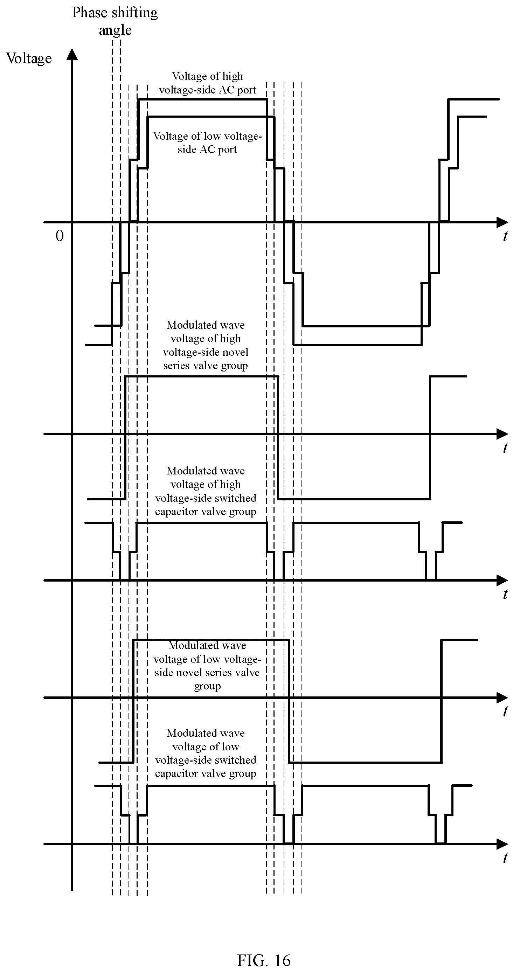

The soft switching method is as follows: as shown in FIG. 16 (the graphs of a voltage of a high voltage-side AC port, a voltage of a low voltage-side AC port, a modulated wave voltage of a high voltage-side series valve group, a voltage of a high voltage-side switched capacitor valve group, a modulated wave voltage of a low voltage-side series valve group and a voltage of a low voltage-side switched capacitor valve group varying with time t are shown in sequence from top to bottom), and the phase shift control is adopted. When the modulated wave voltage of the series valve group is in polarity flipping, the modulated wave voltage of the switched capacitor valve group has been reduced to 0, so ZVS and quasi-ZCS of the series valve group can be achieved.

As can be seen from FIG. 16, the modulated wave voltage of the switched capacitor valve group changes in steps, so dv/dt can be reduced. In the range where the output voltage of the switched capacitor valve group is reduced, the smoothing reactor is used for freewheeling, thus ensuring the stability of direct current-side output current of the direct current transformer.

The above are only preferred embodiments of the present disclosure and are not intended to limit the present disclosure in any form. Although the present disclosure has been disclosed in the preferred embodiments, it is not intended to limit the present disclosure. Any skilled person familiar with the profession, without departing from the scope of the technical schemes of the present disclosure, can use the technical contents disclosed above to make some changes or modifications for equivalent embodiments of equivalent changes. Any simple modification, equivalent variation or modification of the above embodiments in accordance with the technical substance of the technical disclosure, which does not depart from the contents of the technical schemes of the present disclosure, is all still within the scope of the technical schemes of the present disclosure.

## Claims

1. A converter, comprising a series valve group and a switched capacitor valve group connected in parallel, wherein
the series valve group comprises a plurality of valve string bridge arms connected in parallel, and each valve string bridge arm comprises one or more first power switch modules connected in series; and
the switched capacitor valve group comprises one or more second power switch modules connected in series.

2. The converter according to claim 1, wherein the first power switch module comprises a power switch device T1, a diode D1, a voltage equalizing capacitor C1, and an energy dissipating element H1;
the energy dissipating element H1 is connected in parallel to two ends of the voltage equalizing capacitor C1;
an anode of the diode D1 is connected to a collector of the power switch device T1, a first end of the voltage equalizing capacitor C1 is connected to a cathode of the diode D1, a second end of the voltage equalizing capacitor C1 is connected to an emitter of the power switch device T1, and a diode D2 is connected in anti-parallel to the power switch device T1.

3. The converter according to claim 2, wherein the energy dissipating element H1 is any one, or a combination of, an energy acquisition power supply, a first energy dissipating resistor, and a switchable device; and
the switchable device comprises a second energy dissipating resistor, and a switch connected in series with the second energy dissipating resistor.

4. The converter according to claim 2 or 3, wherein the first power switch module further comprises a switch-type bypass element K1, a first end of the switch-type bypass element K1 is connected to the collector of the power switch device T1, and a second end of the switch-type bypass element K1 is connected to the emitter of the power switch device T1.

5. The converter according to claim 1, wherein the second power switch module is any one, or a combination of multiple, of a half-bridge circuit, a full-bridge circuit, and a hybrid module.

6. The converter according to claim 5, wherein the hybrid module comprises a first number of half-bridge circuits and a second number of full-bridge circuits connected in series.

7. The converter according to claim 1, wherein the converter further comprises an electric reactor which is connected to the series valve group.

8. A high-voltage direct current transformer, comprising an isolation transformer, and a converter, wherein
the isolation transformer comprises at least two alternating current ports, each alternating current port is correspondingly connected to one or more converters, and the one or more converters adopt the converter according to any one of claims 1-7.

9. A control method for a converter, wherein the converter adopts the converter according to any one of claims 1-7, and the control method comprises:
controlling an output voltage Um of the converter, which comprises:
performing zero-crossing point detection on Um, wherein a series valve group is switched to an output state only at a zero-crossing point of Um; and
controlling an output voltage |Um| of a switched capacitor valve group.

10. A control method for a high-voltage direct current transformer, wherein the direct current transformer adopts the direct current transformer according to claim 8, and the control method:
controlling an output voltage of a switched capacitor valve group, making the output voltage drop to 0 within time t_{cq} before switching an on/off state of a series valve group, thus achieving soft switching of the series valve group.
